# EUROPEAN PATENT APPLICATION

(11) **EP 0 523 246 A1**
(43) Date of publication of application: **20.01.1993**
(21) Application number: 92904245.5
(22) Date of filing: 03.02.1992
(51) Int. Cl.: B23Q 15/00, G05B 19/405

(54) **METHOD OF PRODUCING MULTI-SPINDLE MACHINING MOTION DATA**

(30) Priority: 06.02.1991 JP 34983/91
(71) Applicant: FANUC LTD., Minamitsuru-gun, Yamanashi 401-05 (JP)
(72) Inventor: SEKI, Masaki, Suginami-ku, Tokyo 168 (JP); TAKEGAHARA, Takashi, Hachioji-shi, Tokyo 192-01 (JP); MATSUNAKA, Toru, Yanai-shi, Yamaguchi 742-01 (JP)
(74) Representative: Billington, Lawrence Emlyn
(86) International application number: JP9200101
(87) International publication number: WO9213674

(57) **Abstract**

This is a method of producing multi-spindle machining motion data, which can avoid bite-in into a work and preparation of useless data in preparing NC data for multi-spindle machining on a corner portion by use of an automatic programming system. Standard types of tool motions are set in accordance with the types of corner portions including an inner portion and an outer corner portion (S1), respectively, further, the standard types as set above are not applied to at least one type of corner portion as long as it falls within specified corner angle ranges (S5, S6, S14, S17), and otherwise specified types are applied (S15, S18) to it.

## Description

### Technical Field

The present invention relates to a method for originating NC data for multi-spindle working of corner portions of a workpiece by means of an automatic programming apparatus or the like.

### Background Art

In originating an NC data for multi-spindle working of corner portion of a workpiece by any of conventional methods, the mode of operation of a tool at a corner of a work has to be varied depending on whether the tool is considered to advance on one and the same curved surface, or to advance transferring from one curved surface to another.

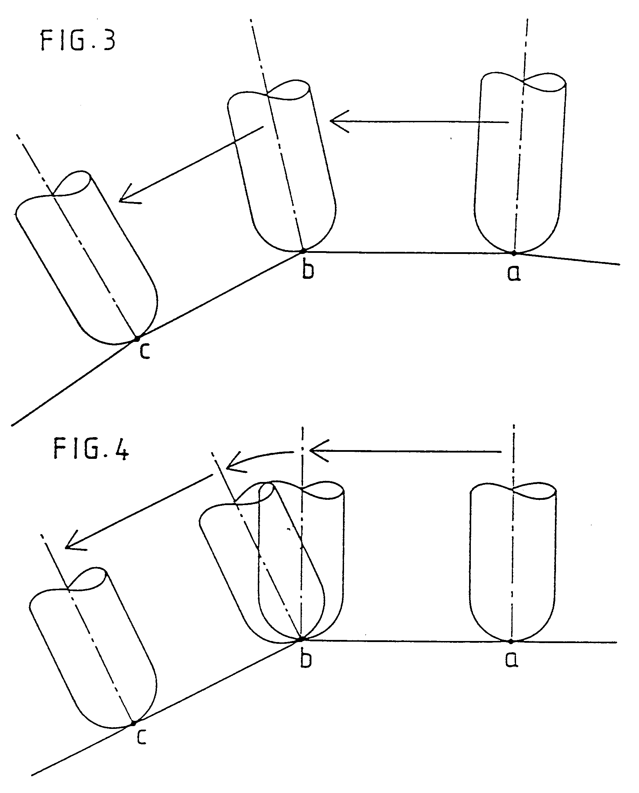

More specifically, in urging the tool at the corner portion to behave on one and the same curved surface, the inclinations of the tool at points a and c of FIG. 3 correspond to the directions of the respective normal vectors of micro-planes which represent the points individually, as the tool moves from the point a to the point c via a point b, as shown in Fig. 3, whereas, the inclination of the tool axis at the point b corresponds to the direction of a vector which has an inclination intermediate between normal vectors at the points a and c, that is, an inclination intermediate between the respective normal vectors of micro-planes ab and bc. As the tool advances from the point a to the point b, its inclination or the direction of the tool axis gradually changes from the direction of the normal vector at the point a to the direction of the normal vector at the point b. Also when the tool advances to the point c via the point b, the direction of the tool axis gradually changes in like manner from the direction of the normal vector at the point b to the direction of the normal vector at the point c.

On the other hand, in urging the tool at the corner portion of a work to behave so that it transfers from one defined curved surface to another, the tool moves from the point a to the next point b (joint between the curved surfaces) with its inclination kept corresponding to the normal vector at the point a, as shown in Fig. 4. When the point b is reached, the tool changes the inclination of its axis from the inclination at the time of the arrival to an inclination corresponding to the start point of the next curved surface, that is, the normal vector of the micro-plane bc (or the normal vector of a micro-plane represented by the point c). Then, the tool starts to advance with the changed inclination to the point c on the next curved surface.

In originating NC data for contour working or other working except normal curved surface working, one of the aforesaid two types of corner portion working has conventionally been selected for use.

When only one of the aforesaid two types of corner portion working is selected and used for tool operation, however, it sometimes gives rise to problems such as a bite in an object of working (workpiece), origination of useless NC data, etc.

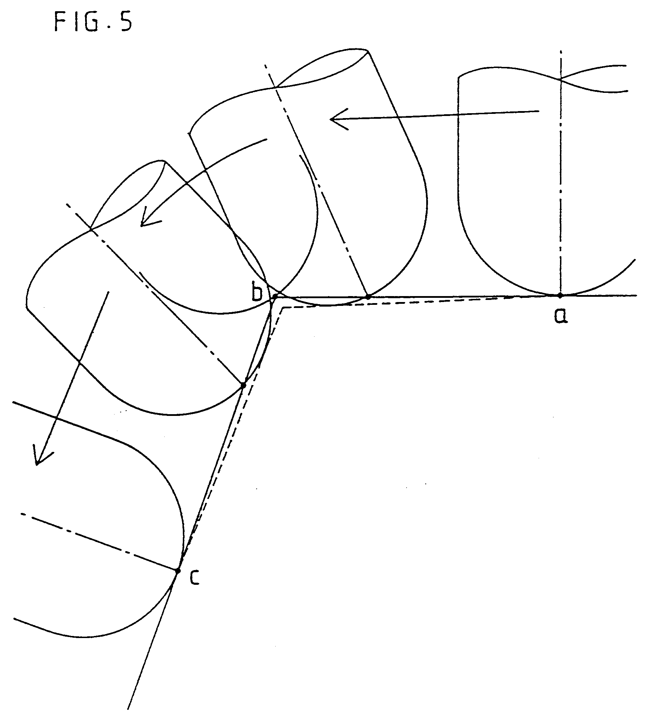

For instance, when a working mode such that the tool at the corner portion, as is shown in Fig.3, is urged to behave on one and the same curved surface for an outside corner containing points a, b and c, as is shown in Fig. 5, that is, when a tool behavior (hereinafter referred to as type A) such that the inclination of the tool axis is gradually changed as the tool is moved from the point a to the point c via the point b with the inclination of the tool at a command point of corner portion set to become an intermediate between the respective inclinations of normal vectors at command points in front and in rear is used, the workpiece will inevitably be cut in the manner indicated by broken line in Fig. 5. Because the tool position, programmed as a tool path, corresponds to the tool end point, and part of the tool face sinks below the tool end point to bite the workpiece when the tool axis is inclined as shown in Fig. 5.

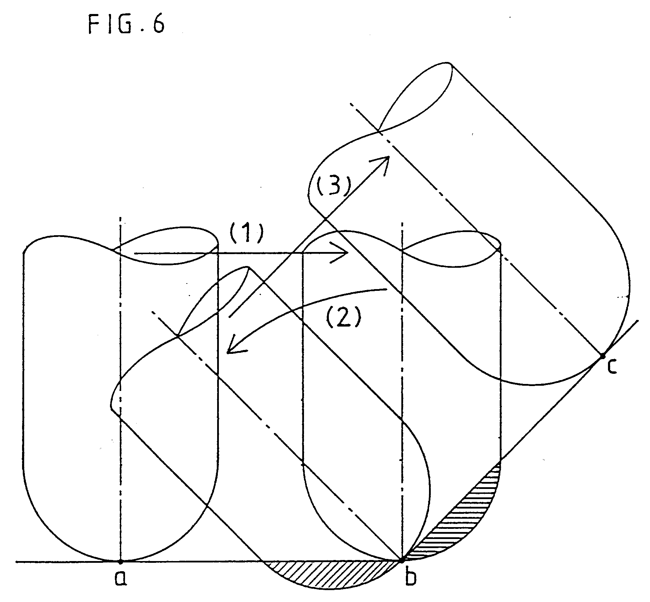

On the other hand, when a working mode such that the tool at the corner portion is urged to behave for transfer from one curved surface to another, as shown in Fig. 4, for an outside corner containing points a, b and c, as shown in Fig. 6, that is, when a tool behavior (hereinafter referred to as type B) such that the tool is not allowed to change the inclination of its axis when it reaches the joint between the curved surfaces, or when it departs from the joint, but is allowed to change the inclination of the tool axis at the joint, is used, the tool moves from the point a to the point b (joint between the surfaces, i.e., junction between the micro-planes ab and bc) without changing the inclination of its axis, as indicated by (1) in Fig. 6, whereas the tool changes its inclination at the point b, by changing its attitude from one at the end of the movement to one at the start of movement on the next curved surface (micro-plane starting at the point b and ending at the point c) or to the direction of the tool axis at the point c, as indicated by (2) in Fig. 6, and then the tool moves toward the point c while maintaining its inclination, as indicated by (3) in Fig. 6. When this tool behavior (Type B) is used, the workpiece will inevitably be cut along the tool path, as indicated by hatching in Fig. 6. This is because part of the tool, as seen from Fig. 6, bites into the micro-plane bc when the tool at the point b has the same inclination as that at the point a at the end of the behavior indicated by (1) in Fig. 6, and it also bites into the micro-plane ab when the tool at the point b has the same inclination as that at the point c at the end of the behavior indicated by (2) in Fig. 6.

An inside corner is a corner such that the bending angle of the surface to be worked is narrower than 180° as shown in Fig. 6, while an outside corner is a corner such that the bending angle of the surface to be worked is greater than 180° as shown in Figs. 3 to 5.

As described above, the working by tool behavior type B requires a part program (1) for working a section from the point a to the point b, a part program (2) for changing the inclination of the tool at the point b and a part program (3) for working a section from the point b to the point c. According to the method of the type A, on the other hand, the corner working is programmed as a part program for working one curved surface containing the points a, b and c of Fig. 3. Thus, the working by the type B has a drawback that it requires more part programs than in the case of the working of the type A.

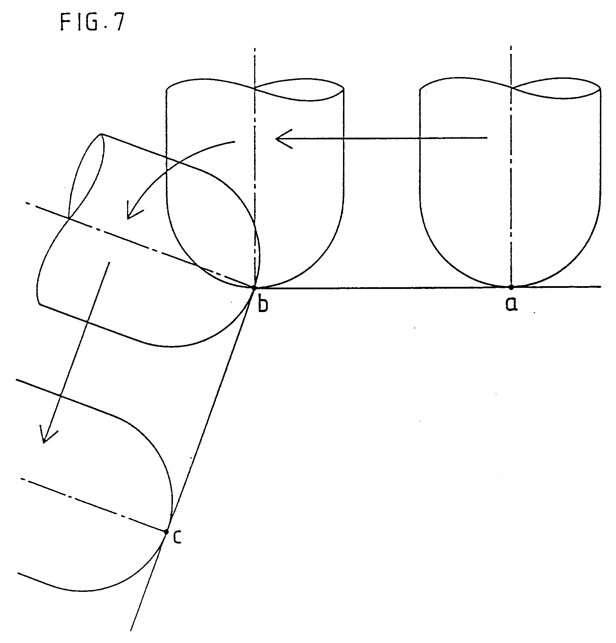

The case of the tool behavior of the type A applied to the outside corner has been described with reference to Fig. 5. Whereas, Fig. 7 shows the case of the tool behavior of the type B applied to the same outside corner. As far as the tool at this outside corner is set for the transfer from one curved surface to another, the problem of the bite can be avoided by applying the working method of the type B to the outside corner, as seen from Fig. 7. Because, the tool does not change its inclination as it passes the point a and stops at the point b, or as it starts at the point b and reaches the point c. Therefore, the micro-planes ab and bc will not be shaven away by the tool. When the tool changes its attitude at the point b (or when the tool inclination at the point a is changed to the tool inclination at the point c), no bite will be caused in the vicinity of the point b, since the point b is on the outside corner. As mentioned before, however, the problem of the elongated part programs remains.

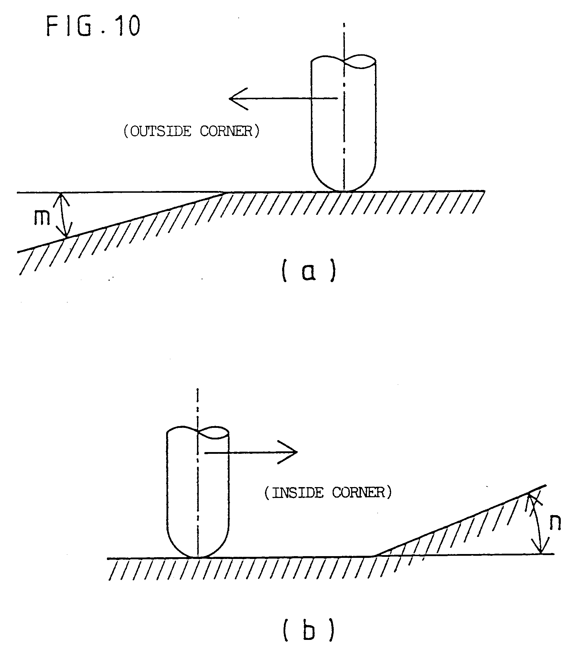

Thus, the problem of the elongated part programs can be avoided as far as the resulting depth of cut remains within its allowable range, even though the working method of the type A is applied to the outside corner, as shown in Fig. 5. Thus, the method of the type A can be used in the case where the corner angle (angle m shown in Fig. 10(a), i.e., angle of change of the micro-plane just behind the corner to the micro-plane just before the corner) of the outside corner portion is small, and therefore, the depth of cut is too small to become a problem even though the tool behavior of the type A is applied.

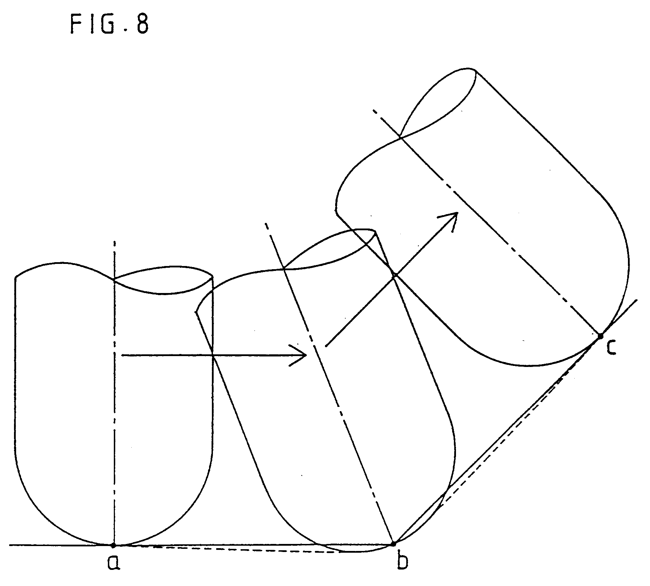

On the other hand, the case of the tool behavior of the type B applied to the inside corner has previously been described with reference to Fig. 6. Whereas, Fig. 8 shows the case of the tool behavior of the type A applied to the same inside corner. When the tool at this corner portion is urged to behave on one and the same curved surface, the axis of the tool at the point b is in the direction intermediate between the direction of the tool axis at the point a and the direction of the tool axis at the point b, as shown in Fig. 8. In this case, therefore, as the tool moves from the point a to the point b or from the point b to the point c, the direction of the tool axis gradually changes, so that slight cuts are inevitably produced on the micro-planes ab and bc, as indicated by broken line in Fig. 8; however, since no such behavior as the change of the attitude at the point b, as is shown in Fig.6 which causes the bite, is not involved. It is evident, therefore, that the depth of cut can be made much smaller than in the case of Fig. 5 where working method of the type A is applied. Moreover, the part programs can be shortened, so that they can be prepared with ease.

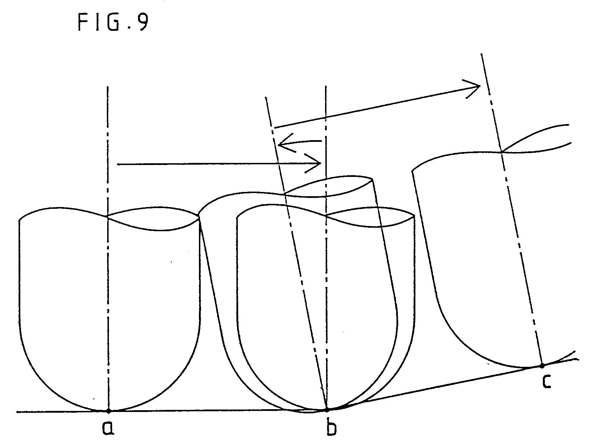

If the corner angle (angle n shown in Fig. 10(b), i.e., angle of change of the micro-plane just behind the corner to the micro-plane just before the corner) of the outside corner portion is small, there is hardly any cut attributable to the change of the tool attitude at the point b (behavior (2) of Fig. 6) even though the tool is urged to behave conforming to the type B, as shown in Fig. 9. Since the tool does not change its inclination before it advances from the point a to the point b or from the point b to the point c, there is hardly any cut in the middle. On the other hand, it is inevitable that the part programs are longer than in the case of the type A, as mentioned before.

### Disclosure of the Invention

The object of the present invention is to provide a method for originating multi-spindle working operation data, in which an unallowable cut in a workpiece, origination of unnecessary data and other problems can be avoided in performing corner working operation by selecting optimum types of tool behavior at corner portions, as an object of working, and issuing command for the selected types in consideration of the form (inside corner or outside corner) and corner angle size of the corner portions.

In order to achieve the above object, there is provided a method for originating NC data for multi-spindle working in accordance with part programs, in which a standard type is set as a tool behavior for working a corner portion corresponding to the form of the corner portion; a corner angle range is set for an exceptional tool behavior of another type without applying the tool behavior of the set standard type to the corner portion of the form concerned; the type of the tool behavior to be applied is discriminated and selected according to the corner form and corner angle of the corner portion set in accordance with the part programs; and the NC data is originated.

Preferably, in a method for originating NC data for multi-spindle working by means of an automatic programming apparatus, a first type is set as a standard type of a tool behavior for a corner portion, and a corner angle range is set for an exceptional tool behavior of a second type different from the first type, without applying the tool behavior of the set standard type, when the corner portion is an outside corner, whereas the second type is set as the standard type of the tool behavior for the corner portion, and a corner angle range is set for an exceptional tool behavior of the first type different from the second type, without applying the tool behavior of the set standard type; when the corner portion is an inside corner, the type of the tool behavior to be applied is discriminated and selected according to the corner form and corner angle of the corner portion set in accordance with the part programs, and the NC data is originated.

Further preferably, the tool behavior of the first type is characterized by that the tool axis maintains the direction of a normal vector given by one micro-plane, which forms a certain corner portion, until the tool reaches a joint portion between the one micro-plane and another micro-plane after advancing along the one micro-plane; the direction is changed from the direction of the tool axis to the direction of the normal vector of the other micro-plane at the joint portion; and the tool advances along the other micro-plane while maintaining the changed tool axis direction, whereas the tool behavior of the second type is characterized by that the tool advances gradually changing the inclination of the tool axis from the direction of the normal vector of one of two micro-planes, which form a corner portion, to the normal vector of the other micro-plane. Further, the tool behavior of the standard type may be applied to the whole angular range with respect to the outside or inside corner of the corner portion so that an exclusion range need not be set for that corner.

According to the present invention, as described above, in originating the NC data for multi-spindle working, the working operation type for a proper tool behavior is selected on each occasion according to the form and angle of the corner portion as an object of working. Thus, origination of unnecessary data, a bite at the corner portion during the working operation and other problems can be avoided to a large extent.

### Brief Description of the Drawings

Fig. 1 is a flow chart showing an NC data originating process according to one embodiment of the present invention;
Fig. 2 is a block diagram showing the principal part of an automatic programming apparatus for carrying out the embodiment;
Fig. 3 is a diagram for illustrating a working mode (type A) in which a tool at a corner portion is urged to behave on one and the same curved surface;
Fig. 4 is a diagram for illustrating a working mode (type B) in which the tool at a corner portion is urged to behave so that it transfers from one curved surface to another;
Fig. 5 is a diagram for illustrating the way the tool cuts an outside corner portion as it moves in the mode of the type A;
Fig. 6 is a diagram for illustrating the way the tool cuts an inside corner portion as it moves in the mode of the type B;
Fig. 7 is a diagram for illustrating the way the tool moves along the outside corner portion in the mode of the type B;
Fig. 8 is a diagram for illustrating the way the tool moves along the inside corner portion in the mode of the type A;
Fig. 9 is a diagram for illustrating the way the tool moves along an inside corner with a narrower angle in the mode of the type B; and
Fig. 10 is a diagram for illustrating the definitions of the respective corner angles of outside and inside corners.

### Best Mode of Carrying Out the Invention

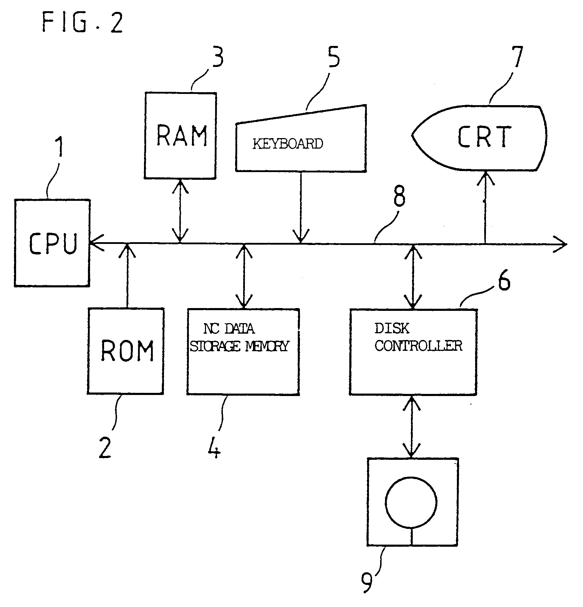

Fig. 2 is a block diagram showing the principal part of an automatic programming apparatus according to one embodiment for carrying out a method of the present invention.

Referring to this drawing, a processor 1, for use as a central processing unit (CPU) of the automatic programming apparatus, is connected to a ROM 2, RAM 3, NC data storage memory 4, keyboard 5, disk controller 6, and graphic display (CRT) 7 by means of buses 8. Among these elements, the ROM 2 is loaded with control programs for the automatic programming apparatus, and the RAM 3 stores system programs or part programs loaded from a floppy disk 9, or part programs interactively originated by means of the CRT 7, keyboard 5, etc. and other various data. The keyboard 5 has conventional character keys, ten-keys and various command keys. The NC data storage memory 4 is a memory which stores originated NC data.

The following is a table based on the foregoing description prepared to show an example of tool behavior types, which are allotted in consideration of the form (inside corner or outside corner) and corner angle size of corner portions as an object of working, in originating NC data for multi-spindle working of the corner portions by means of the automatic programming apparatus.

| Corner: | Outer | Inner |
|---|---|---|
| Standard Type: | Type B | Type A |
| Assigned Type: | Type A | Type B |
| (Angular Range) | (m1 < m < m2) | (m1 < m < m2) |

The angles m1 and m2 are any values which are separately set as required for outside and inside corners, and this does not mean that the outside and inside corners are set within the same angular range. A corner angle is defined as an angle which is formed between an extension of one plane and another plane at a bending point, as shown in Fig. 10.

The above table indicates that the corner portions are allotted to the assigned type if their respective angles range from m1 to m2, and to the standard type if their angles is outside this range.

The following program statement is prepared beforehand as a command for assigning the method of moving a tool at the corner portions to any other type (i.e., assigned type) than the standard type. In response to this command, the corner form, outside or inside, and the angular range from m1 to m2 for the designed type are assigned.

CORNER, (OUT, IN), m1 A, m2 A (TYPE 1, TYPE 2).

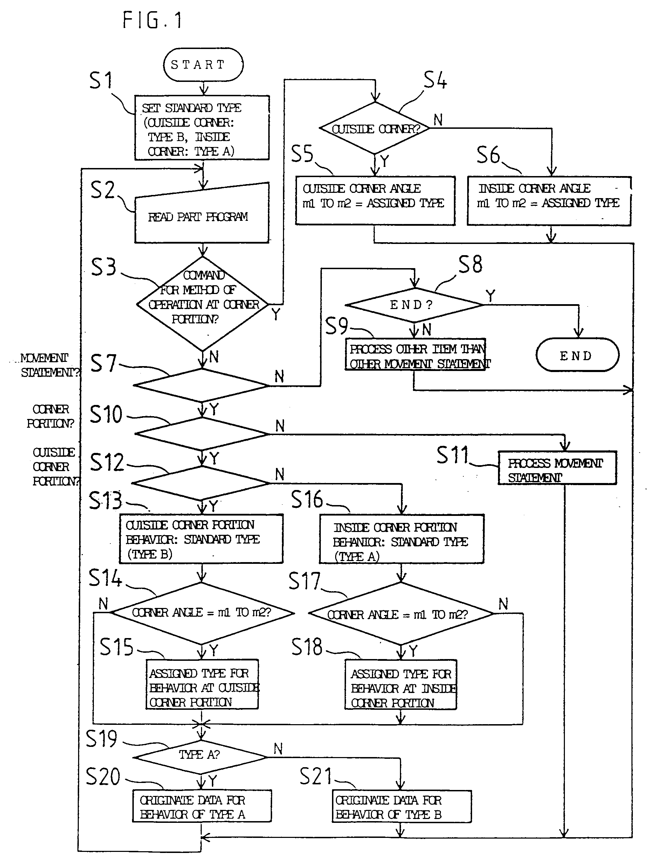

Referring now to the flow chart of Fig. 1, a case of the process for originating NC data for multi-spindle working of a workpiece including the corner portions described above.

First, an operator sets the standard type associated with a tool behavior for working a corner portion as an object of working, especially a corner portion other than a curved surface, such as a contour portion (Step S1). In this process, the depth of cut at the corner portion should be minimized as a primary requirement, and a working operation type corresponding thereto is used as the standard type. As mentioned before and described in the table, therefore, tool behaviors of the type B (Fig. 7) and the type A (Fig. 8) are set as working methods of the standard type for the outside and inside corners respectively. As mentioned before, the type A represents the working mode (see Figs. 3, 5 and 8) in which the tool at the corner portion is subjected to operation on the same curved surface, while the type B represents the working mode (see Figs. 4, 7 and 9) in which the tool at the corner portion is transferred from one curved surface to another.

When a program execution command is inputted after the standard type is set in this manner, the CPU 1 of the automatic programming apparatus reads the part program (Step S2). If the content of the read program is a command (not movement statement) for the method of tool operation at the corner portion (Step S3), it is then determined whether the corner portion is an inside corner or an outside corner (Step S4), and the range from m1 to m2 for the assigned angle, that is, the angular range in which the working operation of the standard type set in Step S1 is not applied to the corner portion concerned, is stored (Steps S5 and S6).

Thus, if the command is associated with the method of operation at an outside corner portion, the range from m1 to m2, assigned as the range of application of the assigned type to the outside corner, is stored in Step S5. If the corner angle of the outside corner of the object of working is within this angular range, the other type (type A) than the standard type (type B) is applied to that corner.

If the command is associated with the method of operation at an inside corner portion, the range from m1 to m2, assigned as the range of the assigned type for the inside corner, is stored in Step S6. If the corner angle of the inside corner of the object of working is within this angular range, the other type (type B) than the standard type (type A) is applied to that corner.

It is a primary requirement that the range of application of this assigned type will not cause the any problem on the depth of cut if the corner portion whose corner angle is within the range is worked by the tool behavior of the assigned type, as mentioned before. As long as this requirement is fulfilled, or unless the depth of cut exceeds an allowable value, a range in which various requirements such as the omission of the origination of unnecessary data, specification of preference in finishing, etc., are fulfilled at a time. If the type (assigned type) determined in this manner is identical with the standard type after all, it is meaningless to set the range of the assigned type. This point will be described later.

After an exclusion range for the standard type associated with the corner portion is stored in response to the command for the method of tool operation for the corner portion in the read part program, the program returns to Step S2, whereupon one block of the part program is read.

If the read content is associated with a movement statement, not with the command for the method of operation at the corner portion (Step S7), the movement statement is processed thereafter (Step S10 and the subsequent steps). If the read content is neither the command for the operation at the corner portion, movement statement, nor program end (Steps S3, S7 and S8), any other item than the movement statement is processed (Step S9), and the program returns to Step S2. If the content is the program end, this NC data origination process ends.

If the read content is associated with a movement statement which is not related to the corner portion, however, this movement statement is processed (Steps S10 and S11), and the program returns to Step S2, whereupon the part program is further read.

Whereas, if the content read as the movement statement is associated with a movement statement for the corner portion, it is determined whether the statement is one related to an outside corner or one related to an inside corner (Step S12). If the movement statement is one related to an outside corner, the program proceeds to Step S13, whereas the program proceeds to Step S16, if the movement statement is one related to an inside corner.

If the read content is associated with a movement statement for an outside corner portion, the type previously set in Step S1, that is, the type B, is set as the standard type for the tool working operation at the outside corner portion (Step S13). Subsequently, it is determined whether or not the corner angle (m) of this outside corner is within the angular range (m1 to m2) previously stored in Step S5, that is, the exclusion range for the standard type (Step S14). If the corner angle is within this range, a tool behavior based on the assigned type (type A in this case) is set for the outside corner (Step S15).

If the read content is associated with a movement statement for an inside corner portion, the type previously set in Step S1, that is, the type A, is set as the standard type for the tool working operation at the inside corner portion (Step S16). Subsequently, it is determined whether or not the corner angle (m) of this inside corner is within the angular range (m1 to m2) previously set in Step S6, that is, the exclusion range for the standard type (Step S17). If the corner angle is within this range, the assigned type (type B in this case) is set for the inside corner.

Thus, for the corner portion of the workpiece concerned, the type (standard type or assigned type) to be applied to the tool behavior is selected and applied in consideration of the form and corner angle size of the corner portion. If the type applicable to this corner portion is set as the type A (Step S19), NC data, which gives the tool an order for the behavior of the type A (Step S20), is originated for this corner portion. Likewise, if the type applicable to this corner portion is set as the type B, NC data, which gives the tool an order for the behavior of the type B (Step S21), is originated for this corner portion. When the behavior origination process for the corner portion is finished in this manner, the program returns to Step S2, whereupon the part program is further read.

In the process described above, the application of the standard type or the alternative type is assigned in accordance with the corner angle after setting the inapplicable range of the standard type for the tool behavior, regardless of whether the corner portion, as an object of behavior origination are an outside corner or an inside corner. Instead of doing this, however, the standard type may be applied to the whole range with respect to either the outside or inside corner so that the exclusion range for the standard type need not be set for that corner. Thus, if the angles m1 and m2 are kept at the initial value "0" without being set, then the standard type is always applied to the outside or inside corner for which no exclusion range is set.

Alternatively, the range in which the standard type is not applied may be provided for only one of the outside and inside corners. In the flow chart of Fig. 1, in this case, Steps S5 and S13 to S15 (in the case of outside corner) or Steps S6 and S16 to S18 (in the case of the inside corner) may be omitted. More specifically, for example, the working method of the type A (standard type) may always be applied to the inside corner without regard to the corner angle, if a cut (see Fig. 8) around the corner portion is to be permitted. Because, in this case, even if the corner angle is narrow, the part program need not be lengthened by switching the working mode to the type B, thereby unnecessarily increasing the number of data.

## Claims

1. A method for originating NC data for multi-spindle working in accordance with part programs, wherein the originating method for multi-spindle working operation data comprises a step of setting a standard type as a tool behavior for working a corner portion corresponding to the form of the corner portion; a step of setting a corner angle range for an exceptional tool behavior of another type without applying the tool behavior of said set standard type to the corner portion of said form; a step of discriminating and selecting the type of the tool behavior to be applied according to the corner form and corner angle of the corner portion set in accordance with the part programs; and a step of originating the NC data.

2. A method for originating NC data for multi-spindle working in accordance with part programs, wherein the originating method for multi-spindle working operation data comprises a step of seating a first type as a standard type of a tool behavior for a corner portion and setting a corner angle range for an exceptional tool behavior of a second type different from the first type, without applying the tool behavior of said set standard type, when the corner portion is an outside corner; a step of setting said second type as the standard type of the tool behavior for the corner portion and setting a corner angle range for an exceptional tool behavior of said first type different from the second type, without applying the tool behavior of said set standard type, when the corner portion is an inside corner; a step of discriminating and selecting the type of the tool behavior to be applied according to the corner form and corner angle of the corner portion set in accordance with the part programs; and a step of originating the NC data.

3. A method for originating NC data for multi-spindle working in accordance with part programs, wherein the originating method for multi-spindle working operation data comprises a step of setting a first type as a standard type of a tool behavior for a corner portion and setting a corner angle range for an exceptional tool behavior of a second type different from the first type, without applying the tool behavior of said set standard type, when the corner portion is an outside corner; a step of setting said first or second type as the standard type of the tool behavior for the corner portion when the corner portion is an inside corner; a step of discriminating and assigning the type of the tool behavior to be applied according to the corner form and corner angle of the corner portion set in accordance with the part programs; and a step of originating the NC data.

4. A method for originating NC data for multi-spindle working in accordance with part programs, wherein the originating method for multi-spindle working operation data comprises a step of setting a first type as a standard type of a tool behavior for a corner portion when the corner portion is an outside corner; a step of setting a second type, different from said first type, as the standard type of the tool behavior for the corner portion and setting a corner angle range for an exceptional tool behavior of the first type different from the second type, without applying the tool behavior of said set standard type, when the corner portion is an inside corner; a step of discriminating and selecting the type of the tool behavior to be applied according to the corner form and corner angle of the corner portion set in accordance with the part programs; and a step of originating the NC data.

5. A method for originating multi-spindle working operation data according to any one of claims 2, 3 and 4, wherein the tool behavior of said first type is characterized by that the tool axis maintains the direction of a normal vector given by one micro-plane, which forms a certain corner portion, until the tool reaches a joint portion between the one micro-plane and another micro-plane after advancing along the one micro-plane, the direction is changed from the direction of the tool axis to the direction of the normal vector of said other micro-plane at said joint portion, and the tool advances along said other micro-plane while maintaining the changed tool axis direction, whereas the tool behavior of said second type is characterized by that the tool advances gradually changing the inclination of the tool axis from the direction of the normal vector of one of two micro-planes, which form a corner portion, to the normal vector of the other micro-plane.
